# EUROPÄISCHE PATENTSCHRIFT

(11) **EP 3 538 974 B1**
(45) Veröffentlichungstag und Bekanntmachung des Hinweises auf die Patenterteilung: **17.02.2021**
(21) Anmeldenummer: 18709523.7
(22) Anmeldetag: 02.03.2018
(51) Int. Cl.: G06F 3/01, B60K 37/06

(54) **EINGABEVERFAHREN MIT VERBESSERTEM HAPTISCHEM FEEDBACK UND ZUGEHÖRIGE EINGABEVORRICHTUNG**
INPUT METHOD HAVING IMPROVED HAPTIC FEEDBACK AND ASSOCIATED INPUT DEVICE
PROCÉDÉ DE SAISIE AVEC RÉTROACTION HAPTIQUE AMÉLIORÉE ET DISPOSITIF DE SAISIE ASSOCIÉ

(30) Priorität: 03.03.2017 DE 102017104541
(43) Veröffentlichungstag der Anmeldung: 18.09.2019
(73) Patentinhaber: PREH GmbH, 97616 Bad Neustadt a.d. Saale (DE)
(72) Erfinder: BODENSTEIN, Tobias, 97616 Salz (DE); PURLE, Stefan, 98634 Wasungen (DE)
(74) Vertreter: Lohmanns, Bernard
(86) Internationale Anmeldenummer: PCT/EP2018/055185
(87) Internationale Veröffentlichungsnummer: WO 2018/158434

(56) Entgegenhaltungen:
- EP-A2- 2 264 572
- WO-A2-2010/112937
- DE-A1-102013 007 962
- DE-A1-102013 016 491
- US-A1- 2016 063 826

## Beschreibung

Die vorliegende Erfindung betrifft ein Eingabeverfahren mit haptischem Feedback. Weiterhin betrifft die Erfindung eine Eingabevorrichtung zum Erfassen einer händischen Eingabe, mit einem Betätigungselement, das nach Erfassen einer händischen Berührung und/oder Betätigung mittels eines Aktors zur Erzeugung des haptischen Feedbacks in Schwingung versetzt wird. Schließlich betrifft die Erfindung ferner die Verwendung der Eingabevorrichtung in einem Kraftfahrzeug.

Eingabevorrichtungen der gattungsgemäßen Art sind dem Grunde nach bekannt und sind beispielsweise in der DE 2013 007 962 A1 beschrieben. Eingabevorrichtungen dienen zum Erfassen einer händischen Eingabe, die in der Regel von einem Nutzer vorgenommen wird, um der Betätigung eine Schalt- und/oder Steuerfunktion zuzuordnen. Zu diesem Zweck weist die Eingabevorrichtung in der Regel wenigstens ein Betätigungselement auf, das vom Nutzer durch Betätigung mittels einer Hand oder einem Finger betätigt werden kann. Auf diese Weise kann der Nutzer Funktionen in gewünschter Weise aktivieren und/oder deaktivieren oder eine Steuerung vornehmen. Solche Eingabevorrichtungen finden einen weiten Anwendungsbereich bei Kraftfahrzeugen, wie Personenkraftfahrzeuge oder Lastkraftfahrzeuge und dienen beispielsweise der Steuerung von Fahrzeugaggregaten.

Es ist bekannt, das Betätigungselement mit einem Aktor zu koppeln und hierdurch eine Rückwirkung, auch Feedback genannt, für einen die Betätigung und/oder Berührung des Betätigungselements bewirkenden Nutzer zu erzeugen.

Beispiele bekannter Eingabevorrichtungen zur Erzeugung eines haptischen Feedbacks sind aus den US 2016/063826 A1, WO 2010/112937 A2 und DE 10 2013 016491 A1 bekannt.

Obwohl sich die Kopplung des Betätigungselements mit dem Aktor bewährt hat, besteht hinsichtlich der Ausgestaltung und Realisierung des Feedbacks weiterer Verbesserungsbedarf, insbesondere wenn es darum geht neben dem haptischen Feedback auch ein akustisches Feedback bereitzustellen.

Es hat sich gezeigt, dass die sich durch die mechanische Wirkweise des Aktors hervorgerufene aber auch die Wechselwirkung mit anderen Komponenten, beispielsweise durch Körperschallanregung erzeugte Schallabstrahlung dieser Komponenten, vom Nutzer als störend empfunden wird und/oder den akustischen Eindruck nachteilig beeinflusst. Weitergehend besteht Bedarf nach einer Möglichkeit das akustische Feedback möglichst unabhängig von der mechanischen Geräuscherzeugung erzeugen zu können, beispielsweise durch einen elektroakustischen Wandler und einem zugehörigen elektrischen Signal. Es besteht daher Bedarf, die durch die Bewegung des Betätigungselements unmittelbar oder indirekt über die Schwingungsanregung weiterer Komponenten der Eingabevorrichtung oder beispielsweise der die Eingabevorrichtung umgebenden Fahrzeugbauteile hervorgerufene Schallabstrahlung zumindest im hörbaren Frequenzbereich zu reduzieren. Daneben besteht grundsätzlich Bedarf nach Energie-, Bauraum- und Gewichtseinsparung im Fahrzeugbau.

Es besteht somit Bedarf nach einem Eingabeverfahren sowie einer zugehörigen Eingabevorrichtung, die vergleichsweise leise arbeitet, und/oder energieeffizient arbeitet bzw. Bauraum und Gewicht einsparend realisiert werden kann.

Diese Aufgabe wird gelöst durch ein Eingabeverfahren gemäß Anspruch 1 und durch eine Eingabevorrichtung gemäß dem nebengeordneten Vorrichtungsanspruch 12. Vorteilhafte Ausgestaltungen sind jeweils Gegenstand der abhängigen Ansprüche. Die Beschreibung, insbesondere im Zusammenhang mit den Figuren, charakterisiert und spezifiziert die Erfindung zusätzlich.

Die Erfindung betrifft ein Eingabeverfahren mit haptischem Feedback, welches die nachfolgenden Schritte aufweist. In einem Bereitstellungsschritt erfolgt ein Bereitstellen eines um eine Ruhelage in einer Schwingungsrichtung schwingend gelagerten Betätigungselements und eines elektromagnetischen Aktors zur schwingungsanregenden Einwirkung in Schwingungsrichtung auf das Betätigungselement sowie Erfassungsmittel zum Erfassen wenigstens eines Beginns einer händischen Berührung und/oder Betätigung des Betätigungselements. Als händische Berührung wird beispielsweise die Berührung mit einem Finger oder der Hand eines Bedieners oder Nutzers verstanden, während unter Betätigung das Einwirken durch eine Hand oder einen Finger unter Aufbringung einer auf das Betätigungselement einwirkenden Betätigungskraft verstanden wird.

Die Erfassungsmittel sind beispielsweise kapazitive Mittel, die die Berührung und/oder eine durch die Betätigung hervorgerufene Lageänderung des Betätigungselements oder die damit verbundene Krafteinwirkung detektieren.

Erfindungsgemäß umfasst die schwingende Lagerung des Betätigungselements eine in die Ruhelage rückstellende Lagerung mittels Federn.

Beispielsweise ist die schwingende Lagerung des Betätigungselements so ausgelegt, dass das Betätigungselement im Wesentlichen senkrecht zur Betätigungsrichtung, bevorzugt parallel zu einer am Betätigungselement ausgebildeten und für eine Betätigung angeordneten Betätigungsfläche gelagert ist. Als eine um eine Ruhelage schwingende Lagerung wird eine monostabile, d.h. in die eine Ruhelage rückstellende, Lagerung des Betätigungselements verstanden. Erfindungsgemäß ist ferner eine mit den Erfassungsmitteln elektrisch verbundene Steuereinheit vorgesehen, die ausgebildet ist, ein elektrisches Steuersignal zur Ansteuerung des elektromagnetischen Aktors zu erzeugen. Dieses Steuersignal besteht aus einer zeitlichen Abfolge eines elektrischen Anregungssignals und eines somit zeitlich nachfolgenden, elektrischen Bremssignals, d.h. Anregungssignal und Bremssignal sind zeitlich getrennt und definieren im Wesentlichen den Verlauf des Steuersignals.

Der elektromagnetische Aktor kann insbesondere einen betätigungselementseitigen Anker und eine mit dem Anker zusammenwirkende Spule umfassen, die am ruhenden Teil der Eingabevorrichtung, beispielsweise dem Gehäuse, vorgesehen und befestigt ist. Das Betätigungselement kann durch einen Hebel, aber auch durch einen Schalter, eine Taste, ein Touchpad oder ein Touchscreen oder Kombinationen hiervon und/oder dergleichen gebildet sein. Mit dem Betätigungselement kann eine händische Betätigung des Nutzers erfasst werden. Das Betätigungselement setzt die händische Betätigung durch den Nutzer in ein Signal um, das beispielsweise ein elektrisches, pneumatisches, hydraulisches oder dergleichen Signal sein kann. Im Bereich der Kraftfahrzeuge kann das Betätigungselement üblicherweise als elektromechanisches Bauteil ausgebildet sein, welches aufgrund händischer Betätigung durch den Nutzer ein elektrisches Signal bereitstellt. Mittels des elektrischen Signals können Funktionen aktiviert und/oder deaktiviert aber auch gesteuert werden.

Das erfindungsgemäße Eingabeverfahren umfasst den Schritt des Anregens einer vorgegebenen Schwingung des Betätigungselements in Schwingungsrichtung mittels des elektromagnetischen Aktors aus dem elektrischen Anregungssignals mit oder nach Erfassen des Beginns der händischen Berührung und/oder Betätigung des Betätigungselements vor. Es kommt aufgrund des Erzeugens einer vorgegebenen Schwingungsanregung in Schwingungsrichtung durch den Aktor zu einer Schwingung des Betätigungselements. "Mit oder nach Erfassen" meint entweder die unmittelbar mit der Detektion der Betätigung einsetzende Erzeugung der Schwingungsanregung oder eine zur Detektion zeitlich versetzte und nachfolgende Erzeugung. Beispielsweise ist das elektrische Anregungssignal ein rechteckförmiger Spannungspuls und beispielswiese wird die Schwingungsanregung durch einen gaußförmigen Kraftimpuls oder Bewegungsimpuls repräsentiert. Ein Impuls im Sinne der Erfindung ist eine vorgegebene, zeitlich begrenzte, mechanische Bewegung oder Krafteinwirkung. Der Impuls kann beispielsweise ein Rechteckimpuls, ein Nadelimpuls, aber auch ein Impuls mit einem kurvenförmigen Verlauf, beispielsweise ein Sinusimpuls oder Dergleichen sein.

Das erfindungsgemäße Eingabeverfahren sieht ferner ein Bremsen der Schwingung des Betätigungselements unter Erzeugen einer vorgegebenen Bremseinwirkung auf das Betätigungselement in Schwingungsrichtung mittels des elektromagnetischen Aktors aus dem elektrischen Bremssignal vor. Das Bremsen kann zeitlich versetzt aber unmittelbar nach dem Anregen erfolgen. Als Bremseinwirkung wird eine Einwirkung auf das Betätigungselement verstanden, bei dessen nachfolgende Schwingungsamplitude in entgegen gesetzter Schwingungsrichtung um mehr als 80% gegenüber der vorhergehenden Amplitude reduziert ist. Gemäß der Erfindung ist vorgesehen, dass der zeitliche Verlauf des elektrischen Anregungssignals und des elektrischen Bremssignals jeweils stetig ist. Damit werden höherfrequente Anteile im Frequenzspektrum der Schwingungsanregung bzw. Bremseinwirkung und damit im Schwingungsverlauf des Betätigungselements vermieden.

Hinsichtlich des zeitlichen Abstandes zwischen Anregen und Bremsen ist die Erfindung nicht eingeschränkt. Beispielswiese ist in einer Ausgestaltung vorgesehen, dass das Bremsen nicht nur nach dem ersten, der Anregung zeitlich folgenden Überschwingen der Ruhelage durch das Betätigungselement erzeugt wird, sondern erst nach dem zweiten oder bevorzugt nach dem dritten Überschwingen der Ruhelage durch das Betätigungselement erzeugt wird. Es soll aber auch eine Ausführungsform mit umfasst sein, bei der das Bremsen zeitlich zwischen dem ersten, der Anregung folgenden Erreichen der Maximalauslenkung und dem ersten Überschwingen der Ruhelage durch das Betätigungselement vorgenommen wird.
Erfindungsgemäß ist vorgesehen, dass das Amplitudenspektrum der am Betätigungselement gemessenen, aus dem Anregen und Bremsen resultierenden Schwingung in Schwingungsrichtung eine Grenzfrequenz mit zugehöriger Grenzamplitude aufweist, wobei das Amplitudenspektrum ab dieser Grenzfrequenz mit zunehmender Frequenz unter der Grenzamplitude bleibt, d.h. die frequenzabhängigen Amplituden mit zunehmender Frequenz unter der Grenzamplitude bleiben. Die Grenzamplitude ist dabei durch einen 70 prozentigen Abfall zu einer Maximalamplitude des Amplitudenspektrums definiert. Erfindungsgemäß ist vorgesehen, dass die Grenzfrequenz in einem Bereich unter 120 Hz liegt. Damit wird eine Schallabstrahlung im hörbaren Frequenzbereich oberhalb der Grenzfrequenz verringert und die Grenzfrequenz ist so gewählt, dass der unter der Grenzfrequenz liegende Bereich in einem Bereich liegt, der aufgrund der menschlichen, durch die sogenannte Hörschwelle beschriebenen, akustischen Wahrnehmbarkeit weniger stark wahrgenommen werden kann. Es wird somit insgesamt ein Verfahren vorgeschlagen, mit dem eine gemäß der menschlichen Wahrnehmung leisere Arbeitsweise realisierbar ist und das aufgrund der sich durch die Einbausituation in einem Kraftfahrzeug typischerweise ergebenden Eigenfrequenzen zu einer verringerten Schwingungsanregung der die Eingabevorrichtung umgebenden Komponenten und damit zu einer verringerten Störgeräuschentstehung führt.

Gemäß einer bevorzugten Ausgestaltung ist die Grenzfrequenz in einem Bereich unter 100 Hz, noch bevorzugter in einem Bereich unter 90 Hz vorgesehen.

Gemäß einer bevorzugten Ausgestaltung des Verfahrens ist vorgesehen, dass das Amplitudenspektrum ab der Grenzfrequenz mit zunehmender Frequenz kontinuierlich abnimmt. Noch bevorzugter ist vorgesehen, dass das Amplitudenspektrum ab der Grenzfrequenz mit zunehmender Frequenz kontinuierlich und stetig abnimmt, dadurch wird insbesondere eine leisere Arbeitsweise der Eingabevorrichtung erreicht.

Das erfindungsgemäße Verfahren zeichnet sich gemäß einer bevorzugten Ausgestaltung dadurch aus, dass das Anregen und das Bremsen, also die Erzeugung des elektrischen Anregungssignals und des elektrischen Bremssignals und die Beaufschlagung des Aktors mit diesen Signalen in einem Zeitintervall von weniger als 25 ms, bevorzugt weniger als 20 ms, noch bevorzugter weniger als 15 ms erfolgen. Anders ausgedrückt der zeitliche Versatz zwischen dem Anregen und dem Bremsen d.h. der Zeitversatz zwischen Einsetzen des elektrischen Anregungssignals und Einsetzen des Bremssignals und deren Verlauf sind so gewählt, dass sie in vorgenanntes Intervall fallen. Es hat sich gezeigt, dass ein darüber hinaus gehendes, ungebremstes Schwingen des Betätigungselements unnötig und damit energieverschwendend und durch den Bediener unter Umständen als unangenehm empfunden wird. Beispielsweise ist vorgesehen, dass der zeitliche Versatz zwischen Bremssignal und erster maximaler, durch die Schwingungsanregung bewirkter Auslenkung aus der Ruhelage weniger als 10 ms beträgt.

Bevorzugt ist vorgesehen, dass ein Maximum des elektrischen Bremssignals zeitlich nach einem zweiten Überschwingen der Ruhestellung erreicht ist. Bisher setzte das Bremssignal vor oder mit Erreichen des ersten Überschwingens der Ruhestellung ein, um das Betätigungselement aus der ausgelenkten Stellung rasch und möglichst ohne Überschwinger in die Ruhestellung zu überführen. Es bestand die Annehme, dass diese frühen Nachschwinger haptisch als nachteilig empfunden werden. Es wurde aber festgestellt, dass die menschliche Sinneswahrnehmung nicht in der Lage ist, diese Überschwinger aufzulösen und damit sich der befürchtete nachteilige Effekt nicht einstellte. Darüber hinaus war eine integrative Wirkung zu beobachten, d.h. die zeitliche Abfolge der Schwingungen wird bei der haptischen Reizverarbeitung aufsummiert, was die Möglichkeit zur Verkleinerung der Maximalauslenkungen bietet gegenüber der Variante ohne Überschwingverhalten. Somit wird insgesamt die Möglichkeit geschaffen, den Energieeintrag zu verringern und somit den Aktor zu verkleinern sowie Bauraum und Gewicht einzusparen.

Gemäß einer bevorzugten Ausgestaltung ist vorgesehen, dass das Betätigungselement so schwingend gelagert ist, dass die zugehörige Resonanzfrequenz im Bereich von 50 bis 300 Hz, bevorzugt im Bereich von 65 bis 150 Hz liegt und durch die mechanische Schwingungsanregung angeregt wird. Es hat sich nämlich gezeigt, dass hier die haptische Sinneswahrnehmung besonders ausgeprägt ist und somit bei gleicher haptischer Wahrnehmbarkeit der durch die Schwingungsanregung und die Bremseinwirkung bewirkte Energieeintrag verringert werden kann. Darüber hinaus ist das die Eingabevorrichtung umgebende System nicht als starr anzusehen, sondern neigt zur Schwingungsanregung. Die zugehörigen Eigenfrequenzen können im hörbaren Bereich liegen. Es besteht daher Bedarf, die Anregung möglichst in einem Frequenzbereich zu betreiben, bei dem die Wahrnehmbarkeit durch den frequenzabhängigen Verlauf der Hörschwelle seitens des Nutzers verringert ist.

Gemäß einer bevorzugten Ausgestaltung sind das Betätigungselement so schwingend gelagert und die mechanische Schwingungsanregung so gewählt, dass die Maximalauslenkung des Betätigungselements aus der Ruhelage weniger als 0,15 mm, bevorzugt weniger als 0,05 mm, bevorzugter weniger als 0,01 mm, meist bevorzugt weniger als 0,005 mm, beträgt, um den Energieeintrag minimieren zu können.

Bevorzugt weist das Betätigungselement eine Masse im Bereich von 100 g bis 1200 g, bevorzugt im Bereich von 500 g bis 1000 g, auf.

Gemäß einer bevorzugten Ausgestaltung sind das elektrische Anregungssignal und das elektrische Bremssignal so gewählt, dass diese jeweils einen Impuls im jeweiligen zeitlichen Verlauf mit einer Halbwertsbreite von mehr als 1 ms, bevorzugt mehr als 2 ms ausbilden. Dadurch wird ein schmalbandigeres Anregungsspektrum bewirkt. Dadurch kann beispielsweise die Schwingungsanregung bezüglich weiterer neben der Schwingungsrichtung vorgesehener Freiheitsgrade mit entsprechenden Eigenfrequenzen oder Vielfachen der Eigenfrequenzen unterbunden werden. Diese zusätzlichen Schwingungsvorgänge werden vom Nutzer regelmäßig als störend empfunden.

Bevorzugt ist vorgesehen, dass der Verlauf aus elektrischem Anregungssignal und elektrischem Bremssignal jeweils zeitlich getrennte Abschnitte eines periodischen, im Wesentlichen sinusförmigen, Steuersignals sind, um ein schmalbandiges Spektrum zu erreichen.

Gemäß einer bevorzugten Ausgestaltung sind Anregen, d.h. Wirkrichtung der Schwingungsanregung, und Bremsen, d.h. Wirkrichtung der Bremseinwirkung bezüglich der Ruhelage gleichgerichtet.

Bevorzugt ist vorgesehen, dass das durch die Steuereinheit erzeugte, elektrische Anregungssignal durch eine ansteigende Flanke des Steuersignals und das durch die Steuereinheit erzeugte, elektrische Bremssignal durch eine abfallende Flanke des Steuersignals ausgebildet werden.

Die Erfindung betrifft ferner eine Eingabevorrichtung zum Erfassen einer händischen Eingabe. Diese weist erfindungsgemäß ein um eine Ruhelage in einer Schwingungsrichtung schwingend gelagertes Betätigungselement und einen elektromagnetischen Aktor zur bewegungsanregenden Einwirkung in Schwingungsrichtung auf das Betätigungselement, Mittel zum Erfassen wenigstens eines Beginns einer händischen Berührung und/oder Betätigung des Betätigungselements sowie eine Steuereinheit zur Erzeugung eines aus einer zeitlichen Abfolge aus elektrischem Ansteuersignal und elektrischem Bremssignal bestehenden Steuersignals für den Aktor auf. Erfindungsgemäß ist die Eingabevorrichtung ausgelegt, das Eingabeverfahren in einer der zuvor beschriebenen Ausführungsformen auszuführen.

Gemäß einer bevorzugten Ausführungsform ist die Steuereinheit ferner ausgelegt, ein zusätzliches elektrisches Signal zur mit der Schwingungsanregung und/oder Bremseinwirkung synchronen Schallerzeugung, beispielsweise mittels eines elektroakustischen Wandlers, zu erzeugen, um ein akustisches Feedback zu erzeugen.

Die Erfindung betrifft ferner die gleichermaßen vorteilhafte Verwendung der Eingabevorrichtung gemäß einer der zuvor beschriebenen Ausführungsformen in einem Kraftfahrzeug. Beispielsweise ist die Eingabevorrichtung in einem Lenkrad, beispielsweise in einer den Lenkradkranz tragenden Lenkradspeiche angeordnet. In einer anderen Ausgestaltung ist die Eingabevorrichtung an einem Armaturenbrett oder einer Innenverkleidung des Kraftfahrzeugs befestigt.

Die Erfindung wird anhand der nachfolgenden Figuren näher erläutert. Die Figuren sind dabei nur beispielhaft zu verstehen und stellen lediglich bevorzugte Ausführungsvarianten dar. Es zeigen:
- Figur 1: eine Schnittansicht durch eine erfindungsgemäße Eingabevorrichtung;
- Figur 2: eine Darstellung des zeitlichen Bewegungsverlaufs des Betätigungselements 2 aus Figur 1 unter Anwendung einer ersten Ausführungsform des erfindungsgemäßen Eingabeverfahrens;
- Figur 3: das zur Figur 2 gehörige Amplitudenspektrum des Bewegungsverlaufs;
- Figur 4a: eine Darstellung des zeitlichen Bewegungsverlaufs des Betätigungselements 2 aus Figur 1 unter Anwendung einer zweiten Ausführungsform des erfindungsgemäßen Eingabeverfahrens;
- Figur 4b: eine zur Figur 4a gehörige zeitliche Verlaufsdarstellung des zur Beaufschlagung des Aktors vorgesehenen und von der Steuereinheit 8 aus Figur 1 erzeugten, elektrischen Anregungssignals und Bremssignals;
- Figur 5a: eine Darstellung des zeitlichen Bewegungsverlaufs des Betätigungselements 2 aus Figur 1 unter Anwendung einer dritten Ausführungsform des erfindungsgemäßen Eingabeverfahrens;
- Figur 5b: eine zur Figur 5a gehörige zeitliche Verlaufsdarstellung des zur Beaufschlagung des Aktors vorgesehenen und von der Steuereinheit 8 aus Figur 1 erzeugten, elektrischen Anregungssignals und Bremssignals.

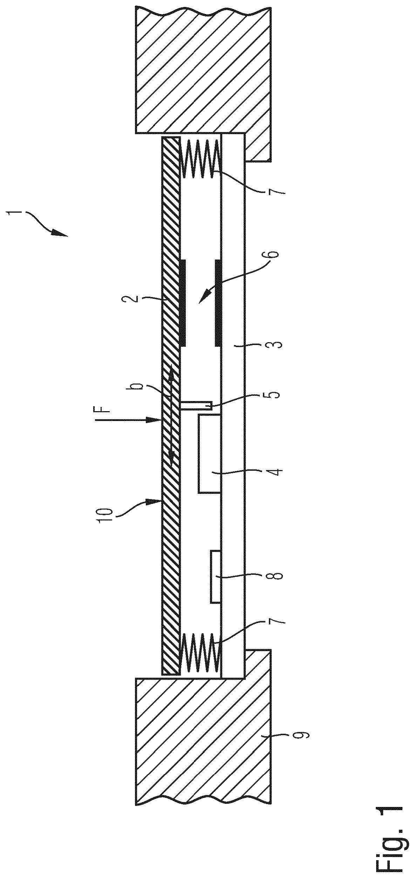

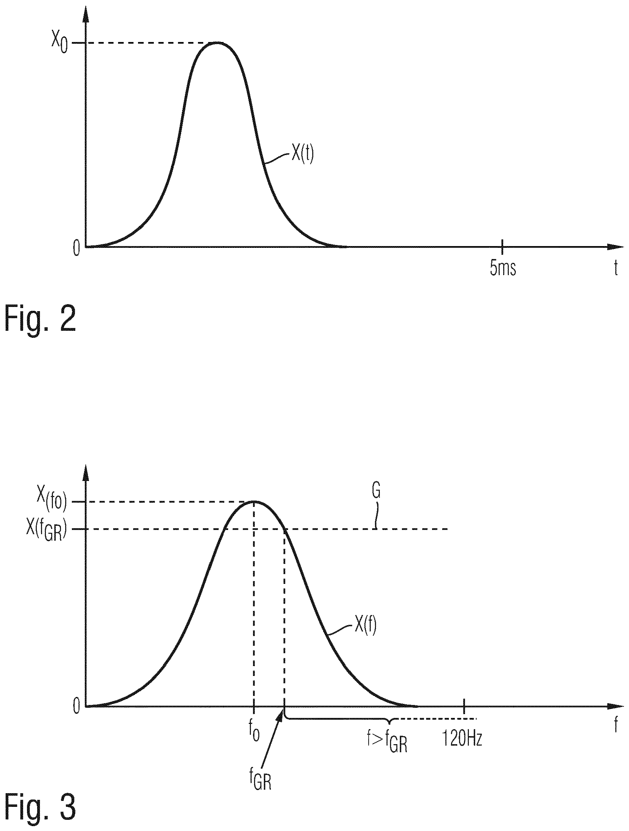

Figur 1 zeigt eine Ausführungsform der erfindungsgemäßen Eingabevorrichtung 1. Diese ist ausgelegt, das erfindungsgemäße Eingabeverfahren durchzuführen, wie es anhand der nachfolgenden Figuren 2 bis 5b und anhand exemplarischer Ausführungsformen des erfindungsgemäßen Eingabeverfahrens beschrieben wird. Die erfindungsgemäße Eingabevorrichtung 1 weist einen Träger 3 auf, der mit einer Innenverkleidung 9 eines Kraftfahrzeugs starr verbunden ist. An dem Träger 3 ist ein Betätigungselement 2 mittels Federn 7 beweglich gelagert.

Die Federn 7 gewährleisten eine in eine Ruhestellung rückstellende Lagerung des Betätigungselements 2. Das Betätigungselement 2 definiert eine Betätigungsfläche 10. Bei Einwirken einer durch einen nicht dargestellten Bediener, auch Nutzer genannt, aufgebrachten Betätigungskraft F auf die Betätigungsfläche 10 kommt es zu einer der rückstellenden Wirkung der Federn 7 entgegen gerichteten Verlagerung des Betätigungselements 2 in Richtung des Trägers 3. Es sind Mittel 6 zur Erfassung einer Betätigung des Betätigungselements 2 in Form eines kapazitiven, d.h. eine Messkapazität ausbildenden, Kraftsensors 6 vorgesehen, die bei Überschreiten einer Mindestannäherung eine Betätigung positiv detektieren. Diese Betätigung soll bei der erfindungsgemäßen Eingabevorrichtung 1 durch eine haptische Rückmeldung dem Bediener bestätigt werden. Dazu ist ein elektromagnetischer Aktor 4, 5 vorgesehen, der einen am Betätigungselement 2 starr befestigten Anker 5 und eine am Träger 3 starr befestigte, mit dem Anker 5 zusammenwirkende Spule 4 aufweist. Der Aktor 4, 5 ist vorgesehen, das Betätigungselement 2 in einer zur Betätigungsfläche 10 parallelen Schwingungsrichtung S in Schwingung zu versetzen und nachfolgend abzubremsen. Diese Schwingung wird von dem Bediener als haptisches Feedback haptisch wahrgenommen uns soll möglichst wenig akustisch zumindest möglichst ohne durch die Schwingung verursachte Schallabstrahlung wahrgenommen werden. Dazu wird die Spule 4 des Aktors 4, 5 entsprechend durch eine auf dem Träger 3 angeordnete Steuereinheit 8 mit einem elektrischen Anregungssignal bzw. Bremssignal bestromt. Diese Bestromung der Spule 4 des Aktors erfolgt nach Detektion einer Betätigung durch den Kraftsensor 6, um eine Schwingung des Betätigungselements 2 in Schwingungsrichtung S anzuregen und dieses darauffolgend abzubremsen. Gemäß dem erfindungsgemäßen Eingabeverfahren ist vorgesehen, dass das Amplitudenspektrum der am Betätigungsteil 2 gemessenen, aus dem Anregen und Bremsen resultierenden Schwingungsvorgang in Schwingungsrichtung den anhand von den Figuren 2 und 3 erläuterten Bedingungen genügt. Figur 2 zeigt schematisch und stark vereinfacht den Schwingungsvorgang, d.h. den zeitlichen Auslenkungsverlauf X(t). Das zugehörige, durch Fouriertransformation gewonnene Amplitudenspektrum X(f) ist in Figur 3 gezeigt. Erfindungsgemäß weist das zur Auslenkung X(t) gehörige Amplitudenspektrum X(f) eine Grenzfrequenz f_{GR} auf, die durch einen 70-prozentigen Abfall zur Maximalamplitude X(f₀) definiert ist und ab der mit zunehmender Frequenz f das Amplitudenspektrum X(f>f_{GR}) unter der durch die Grenzfrequenz f_{GR} definierten Grenzamplitude X(fGR) bleibt. Im vorliegenden Fall nimmt das Amplitudenspektrum X(f) ab dieser Grenzfrequenz f_{GR} kontinuierlich und stetig ab. Die Grenzfrequenz f_{GR} ist ferner dadurch definiert, dass sie weniger als 120 Hz beträgt.

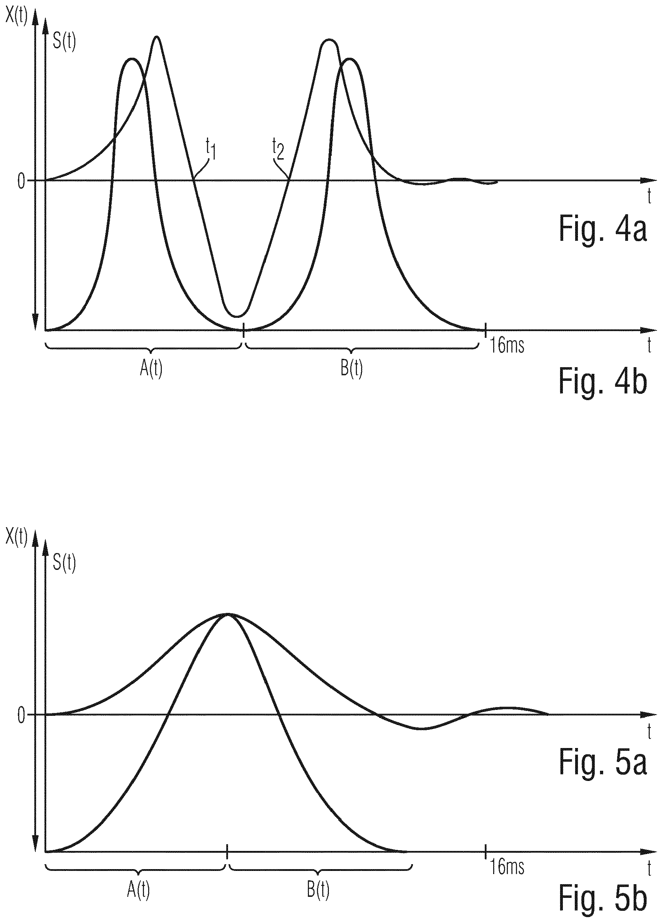

Anhand der Figuren 4a und 4b beziehungsweise 5a und 5b wird der erfindungsgemäße Zusammenhang zwischen Schwingungsverhalten des Betätigungselements 2 und dem durch die Steuereinheit 8 aus Figur 1 erzeugten elektrischen Steuersignal S(t) erläutert. Wie in Figur 4b gezeigt, ist das Steuersignal S(t) durch die zeitliche Abfolge eines elektrischen Anregungssignals A (t) und eines elektrischen Bremssignals B(t) definiert. Beide werden in einem Zeitintervall von weniger als 16ms erzeugt und zeichnen sich jeweils durch einen stetig differenzierbaren Verlauf aus. Bei dem in Figur 4b gezeigten Verlauf des Steuersignals S(t) weisen das Bremssignal B(t) und das Anregungssignal A(t) jeweils ein lokales Maximum auf, wohingegen in dem in Figur 5b gezeigten Verlauf das Anregungssignal A(t), welches durch eine ansteigende Flanke des Steuersignals S(t) definiert ist, mit Erreichen des lokalen Maximums in das Bremssignal B(t) übergeht, welches seinerseits durch eine abfallende Flanke des Steuersignals S(t) definiert ist. Die sich aus den Steuersignalen S(t) der Figuren 4b und 5b ergebenden Schwingungsverhalten X(t) des Betätigungselements 2 aus Figur 1 sind entsprechend in den Figuren 4a und 5a gezeigt.

Wie in Figur 4a gezeigt, ergibt sich aus dem Steuersignal der Figur 4b ein Schwingungsverhalten X(t), bei dem vor Erreichen des Maximums des Bremssignals B(t) das Betätigungselement 2 aus Figur 1 die Ruhelage 0 zu den Zeitpunkten t₁ und t₂, somit zweimal, durchschwungen hat. Im Gegensatz dazu ergibt sich im Schwingungsverhalten S(t) gemäß Figur 5a des Betätigungselements aus Figur 1 kein Durchschwingen der Ruhelage 0 bis zum "Ausklingen" des Bremssignals B(t) der Figur 5b. Anders ausgedrückt, in der dritten Ausführungsform des erfindungsgemäßen Eingabeverfahrens folgt das Betätigungselement 2 aus Figur 1 dem Steuersignal S(t) der Figur 5b nahezu unmittelbar.

## Patentansprüche

1. Eingabeverfahren mit haptischem Feedback, aufweisend folgende Schritte:
Bereitstellen eines um eine Ruhelage (0) in einer Schwingungsrichtung (S) schwingend gelagerten Betätigungselements (2), eines elektromagnetischen Aktors (4, 5) zur schwingungsanregenden Einwirkung in Schwingungsrichtung (S) auf das Betätigungselement (2) sowie Erfassungsmittel (6) zum Erfassen wenigstens eines Beginns einer händischen Berührung und/oder Betätigung des Betätigungselements (2) in einer Betätigungsrichtung und einer mit den Erfassungsmitteln (6) elektrisch verbundenen Steuereinheit (8) zur Erzeugung eines elektrischen Steuersignals (S(t)), welches in zeitlicher Abfolge ein elektrisches Anregungssignal (A(t)) und ein elektrisches Bremssignal (B(t)) zur Ansteuerung des elektromagnetischen Aktors (4, 5) aufweist;
Anregen einer vorgegebenen Schwingung (X(t)) des Betätigungselements (2) in Schwingungsrichtung (S) zur Erzeugung eines haptischen Feedbacks mittels des elektromagnetischen Aktors (4, 5) aus dem elektrischen Anregungssignals (A(t)) mit oder nach Erfassen des Beginns der händischen Berührung und/oder Betätigung des Betätigungselements (2) durch die Erfassungsmittel (6) und;
Bremsen der Schwingung (X(t)) des Betätigungselements (2) unter Erzeugung einer Bremseinwirkung auf das Betätigungselement (2) in Schwingungsrichtung (S) mittels des elektromechanischen Aktuators (4, 5) aus dem elektrischen Bremssignal (B(t)),
**dadurch gekennzeichnet, dass** die schwingende Lagerung des Betätigungselements (2) eine in die Ruhelage rückstellende Lagerung mittels Federn (7) umfasst; dass der zeitliche Verlauf des elektrischen Anregungssignals (A(t)) und der zeitliche Verlauf des elektrischen Bremssignals (B(t)) jeweils stetig differenzierbar sind und dass
das Amplitudenspektrum (X(f)) der am Betätigungselement (2) gemessenen, aus dem Anregen und Bremsen resultierenden Schwingung (X(t)) in Schwingungsrichtung (S) eine Grenzfrequenz (f_{GR}) mit zugehöriger Grenzamplitude (X(f_{GR})) aufweist, wobei das Amplitudenspektrum (X(f>f_{GR})) ab dieser Grenzfrequenz (f_{GR}) mit zunehmender Frequenz unter der Grenzamplitude (X(f_{GR}) bleibt, die Grenzamplitude durch einen 70 prozentigen Abfall zu einer Maximalamplitude (X(f₀)) des Amplitudenspektrums (X(f)) definiert ist, und dass die Grenzfrequenz (f_{GR}) in einem Bereich unter 120 Hz liegt, bevorzugt in einem Bereich unter 100 Hz, noch bevorzugter in einem Bereich unter 90 Hz liegt.

2. Eingabeverfahren nach Anspruch 1, **dadurch gekennzeichnet, dass** das Amplitudenspektrum (X(f>f_{GR})) ab der Grenzfrequenz (f_{GR}) mit zunehmender Frequenz kontinuierlich, bevorzugt kontinuierlich und stetig, abnimmt.

3. Eingabeverfahren nach einem der vorhergehenden Ansprüche, **dadurch gekennzeichnet, dass** das Anregen und Bremsen in einem Zeitintervall von weniger als 25 ms, bevorzugt weniger als 20 ms, noch bevorzugter weniger als 15 ms, erfolgen.

4. Eingabeverfahren nach einem der vorhergehenden Ansprüche, **dadurch gekennzeichnet, dass** ein Maximum des elektrischen Bremssignals zeitlich nach einem zweiten Überschwingen der Ruhestellung erreicht ist.

5. Eingabeverfahren nach einem der vorhergehenden Ansprüche, **dadurch gekennzeichnet, dass** das Betätigungselement (2) so schwingend gelagert ist, dass die zugehörige Resonanzfrequenz im Bereich von 50 bis 300 Hz, bevorzugt im Bereich von 65 bis 150 Hz liegt und durch das Anregen angeregt wird.

6. Eingabeverfahren nach einem der vorhergehenden Ansprüche, **dadurch gekennzeichnet, dass** das Betätigungselement (2) so schwingend gelagert und die Anregung so gewählt sind, dass die Maximalauslenkung der Schwingung des Betätigungselements (2) weniger als 0,15 mm, bevorzugt weniger als 0,05 mm, bevorzugter weniger als beträgt.

7. Eingabeverfahren nach einem der vorhergehenden Ansprüche, **dadurch gekennzeichnet, dass** das Betätigungselement (2) eine Masse im Bereich von 100 g bis 1200 g, bevorzugt im Bereich von 500 g bis 1000 g, aufweist.

8. Eingabeverfahren nach einem der vorhergehenden Ansprüche, **dadurch gekennzeichnet, dass** das von der Steuereinheit (8) bereitgestellte elektrische Anregungssignal (A(t)) und das elektrische Bremssignat (B(t)) so gewählt sind, dass diese jeweils einen Impuls im jeweiligen zeitlichen Verlauf mit einer Halbwertsbreite von mehr als 1 ms, bevorzugt mehr als 2 ms ausbildet.

9. Eingabeverfahren nach einem der vorhergehenden Ansprüche, **dadurch gekennzeichnet, dass** der Verlauf des elektrischen Anregungssignals (A(t)) und der Verlauf des elektrischen Bremssignals (B(t)) jeweils Teil eines periodischen, im Wesentlichen sinusförmigen, Steuersignals (S(t)) sind.

10. Eingabeverfahren nach einem der vorhergehenden Ansprüche, **dadurch gekennzeichnet, dass** das elektrische Anregungssignal (A(t)) durch eine ansteigende Flanke des Steuersignals (S(t)) und das Bremssignal (B(t)) durch eine abfallende Flanke des Steuersignals (S(t)) ausgebildet werden.

11. Eingabeverfahren nach einem der vorhergehenden Ansprüche, **dadurch gekennzeichnet, dass** Anregen und Bremsen bezüglich der Ruhelage (0) gleichgerichtet sind.

12. Eingabevorrichtung (1) zum Erfassen einer händischen Eingabe, aufweisend ein um eine Ruhelage (0) in einer Schwingungsrichtung (S) schwingend gelagertes Betätigungselement (2) und einen elektromagnetischen Aktor (4, 5) zur schwingungsanregenden Einwirkung in Schwingungsrichtung (S) auf das Betätigungselement (2) sowie Mittel (6) zum Erfassen wenigstens eines Beginns einer händischen Berührung und/oder Betätigung des Betätigungselements (2) sowie eine Steuereinheit (8) zur Erzeugung eines elektrischen Steuersignals S(t), welches in zeitlicher Abfolge ein elektrisches Anregungssignal (A(t)) und ein elektrisches Bremssignal (B(t)) zur Ansteuerung des elektromagnetischen Aktors (4, 5) aufweist, **dadurch gekennzeichnet, dass** die Eingabevorrichtung (1) ausgelegt ist, das Eingabeverfahren nach einem der vorhergehenden Ansprüche auszuführen.

13. Eingabevorrichtung nach dem vorhergehenden Anspruch, **dadurch gekennzeichnet, dass** die Steuereinheit (8) ferner ausgelegt ist, ein zusätzliches elektrisches Signal zur mit dem Anregen und/oder Bremsen synchronen Schallerzeugung, beispielsweise mittels eines elektroakustischen Wandlers, zu erzeugen.

14. Kraftfahrzeug aufweisend eine Eingabevorrichtung (1) gemäß einem der beiden vorhergehenden Ansprüche.

## Claims

1. Input method with haptic feedback, having the following steps:
providing an activation element (2) which is mounted so as to oscillate about a position of rest (0) in an oscillation direction (S), of an electromagnetic actuator (4, 5) for acting on the activation element (2) by exciting oscillations in the oscillation direction (S), and sensing means (6) for sensing at least one start of manual contact and/or activation of the activation element (2) in an activation direction and a control unit (8) which is electrically connected to the sensing means (6) and has the purpose of generating an electrical control signal (S)(t)) which has, in a chronological sequence, an electrical excitation signal (A)(t)) and an electrical brake signal (B(t)) for actuating the electromagnetic actuator (4, 5);
exciting a specified oscillation (X(t)) of the activation element (2) in an oscillation direction (S) for generating haptic feedback by means of the electromagnetic actuator (4, 5) from the electrical excitation signal (A(t)) with or after sensing of the start of the manual contact and/or activation of the activation element (2) by the sensing means (6), and;
braking oscillation (X(t)) of the activation element (2) by generating a braking effect on the activation element (2) in the oscillation direction (S) by means of the electrical mechanical actuator (4, 5) from the electrical brake signal (B(t)),
**characterized in that**
the oscillating mounting of the activation element (2) comprises mounting by means of springs (7), which resets into the position of rest;
**in that** the time profile of the electrical excitation signal (A(t)) and the time profile of the electrical brake signal (B(t)) can each be constantly differentiated, and **in that** the amplitude spectrum (X(f)) of the oscillation (X(t)) which is measured at the activation element (2) and results from the excitation and braking has in the oscillation direction (S) a cutoff frequency (f_{GR}) with an associated cutoff amplitude (X(f_{GR})), wherein starting from this cutoff frequency (f_{GR}) the amplitude spectrum (X(f>f_{GR})) remains below the cutoff amplitude (X(f_{GR})) as the frequency increases and the cutoff amplitude is defined by a 70 percentage drop to a maximum amplitude (X(f₀)) of the amplitude spectrum (X(f)), and **in that** the cutoff frequency (f_{GR}) lies in a range below 120 Hz, preferably in a range below 100 Hz, and more preferably in a range below 90 Hz.

2. Input method according to Claim 1, **characterized in that** starting from the cutoff frequency (f_{GR}) the amplitude spectrum (X(f>f_{GR})) decreases continuously, preferably continuously and constantly, as the frequency increases.

3. Input method according to one of the preceding claims, **characterized in that** the excitation and braking occur in a time interval of less than 25 ms, preferably of less than 20 ms, more preferably less than 15 ms.

4. Input method according to one of the preceding claims, **characterized in that** a maximum of the electrical brake signal is reached chronologically after a second overshoot of the position of rest.

5. Input method according to one of the preceding claims, **characterized in that** the activation element (2) is mounted in an oscillating fashion such that the associated resonant frequency is excited in the range from 50 to 300 Hz, preferably in the range from 65 to 150 Hz, and by the excitation.

6. Input method according to one of the preceding claims, **characterized in that** the activation element (2) is mounted in an oscillating fashion and the excitation is selected such that the maximum deflection of the oscillation of the activation element (2) is less than 0.15 mm, preferably less than 0.05 mm, preferably less than.

7. Input method according to one of the preceding claims, **characterized in that** the activation element (2) has a mass in the range from 100 g to 1200 g, preferably in the range from 500 g to 1000 g.

8. Input method according to one of the preceding claims, **characterized in that** the electrical excitation signal (A(t)) which is provided by the control unit (8) and the electrical brake signal (B(t)) are selected such that they each form a pulse in the respective time profile with a half-value width more than 1 ms, preferably more than 2 ms.

9. Input method according to one of the preceding claims, **characterized in that** the profile of the electrical excitation signal (A(t)) and the profile of the electrical brake signal (B(t)) are each part of a periodic, essentially sinusoidal, control signal (S(t)).

10. Input method according to one of the preceding claims, **characterized in that** the electrical excitation signal (A(t)) is formed by a rising edge of the control signal (S(t)), and the brake signal (B(t)) is formed by a falling edge of the control signal (S(t)).

11. Input method according to one of the preceding claims, **characterized in that** the excitation and braking are rectified with respect to the position of rest (0).

12. Input device (1) for sensing a manual input having an activation element (2) which is mounted so as to oscillate about a position of rest (0) in an oscillation direction (S), and an electromagnetic actuator (4, 5) for acting on the activation element (2) by exciting oscillations in the oscillation direction (S), as well as means (6) for sensing at least a start of manual contact and/or activation of the activation element (2) as well as a control unit (8) for generating an electrical control signal S(t) which has in a chronological sequence an electrical excitation signal (A(t)) and an electrical brake signal (B(t)) for actuating the electromagnetic actuator (4, 5), **characterized in that** the input device (1) is configured to carry out the input method according to one of the preceding claims.

13. Input device according to the preceding claim, **characterized in that** the control unit (8) is also configured to generate an additional electrical signal for generating sound in synchronism with the excitation and/or braking, for example by means of an electroacoustic transducer.

14. Motor vehicle having an input device (1) according to one of the two preceding claims.

## Revendications

1. Procédé de saisie avec retour haptique, ledit procédé comprenant les étapes suivantes :
fournir un élément d'actionnement (2) monté de façon à osciller autour d'une position de repos (0) dans une direction d'oscillation (S), un actionneur électromagnétique (4, 5) destiné à produire une action d'excitation d'oscillation dans la direction d'oscillation (S) sur l'élément d'actionnement (2), et des moyens de détection (6) destinés à détecter au moins le début d'un contact, et/ou d'un actionnement, manuel de l'élément d'actionnement (2) dans une direction d'actionnement et une unité de commande (8) reliée électriquement aux moyens de détection (6) et destinée à générer un signal de commande électrique (S(t)) qui comporte dans une séquence temporelle un signal d'excitation électrique (A(t)) et un signal de freinage électrique (B(t)) destinés à commander l'actionneur électromagnétique (4, 5) ;
produire une oscillation prédéterminée (X(t)) de l'élément d'actionnement (2) dans la direction d'oscillation (S) pour générer un retour haptique au moyen de l'actionneur électromagnétique (4, 5) à partir du signal d'excitation électrique (A(t)) avec ou après la détection du début du contact, et/ou de l'actionnement, manuel de l'élément d'actionnement (2) par les moyens de détection (6) et ;
freiner l'oscillation (X(t)) de l'élément d'actionnement (2) par génération d'un effet de freinage sur l'élément d'actionnement (2) dans la direction d'oscillation (S) au moyen de l'actionneur électromécanique (4, 5) à partir du signal de freinage électrique (B(t)),
**caractérisé en ce que**
le montage oscillant de l'élément d'actionnement (2) comprend un montage de rappel en position de repos au moyen de ressorts (7) ; **en ce que**
la variation dans le temps du signal d'excitation électrique (A(t)) et la variation dans le temps du signal de freinage électrique (B(t)) sont chacune différentiables de manière continue et **en ce que**
le spectre d'amplitude (X(f)) de l'oscillation (X(t)) mesurée sur l'élément d'actionnement (2) et résultant de l'excitation et du freinage dans la direction d'oscillation (S) a une fréquence limite (f_{GR}) d'amplitude limite associée (X(f_{GR})), le spectre d'amplitude (X(f>f_{GR})) restant au-dessous de l'amplitude limite (X(f_{GR})) à partir de cette fréquence limite (f_{GR}) à mesure que la fréquence augmente, l'amplitude limite étant définie par une chute de 70 pour cent par rapport à une amplitude maximale (X(f₀)) du spectre d'amplitude (X(f)),
et **en ce que** la fréquence limite (f_{GR}) est dans une plage inférieure à 120 Hz, de préférence dans une plage inférieure à 100 Hz, de manière encore plus préférée dans une plage inférieure à 90 Hz.

2. Procédé de saisie selon la revendication 1, **caractérisé en ce que** le spectre d'amplitude (X(f>f_{GR})) décroît de manière continue, de préférence de manière continue et régulière, à mesure que la fréquence augmente à partir de la fréquence limite (f_{GR}).

3. Procédé de saisie selon l'une des revendications précédentes, **caractérisé en ce que** l'excitation et le freinage sont effectués dans un intervalle de temps inférieur à 25 ms, de préférence inférieur à 20 ms, de manière encore plus préférée inférieur à 15 ms.

4. Procédé de saisie selon l'une des revendications précédentes, **caractérisé en ce qu'**un maximum du signal de freinage électrique est atteint temporairement après un deuxième dépassement de la position de repos.

5. Procédé de saisie selon l'une des revendications précédentes, **caractérisé en ce que** l'élément d'actionnement (2) est monté de manière oscillante de sorte que la fréquence de résonance associée soit dans la gamme de 50 à 300 Hz, de préférence dans la gamme de 65 à 150 Hz et est excité par l'excitation.

6. Procédé de saisie selon l'une des revendications précédentes, **caractérisé en ce que** l'élément d'actionnement (2) est monté de manière oscillante et l'excitation est choisie de sorte que la déflexion maximale de l'oscillation de l'élément d'actionnement (2) soit inférieure à 0,15 mm, de préférence inférieure à 0,05 mm, plus préférablement inférieure à.

7. Procédé de saisie selon l'une des revendications précédentes, **caractérisé en ce que** l'élément d'actionnement (2) a une masse dans la gamme allant de 100 g à 1200 g, de préférence dans la gamme allant de 500 g et 1000 g.

8. Procédé de saisie selon l'une des revendications précédentes, **caractérisé en ce que** le signal d'excitation électrique (A(t)) produit par l'unité de commande (8) et le signal de freinage électrique (B(t)) sont choisis de manière à former chacun dans la variation temporelle respective une impulsion ayant une demi-largeur de plus de 1 ms, de préférence plus de 2 ms.

9. Procédé de saisie selon l'une des revendications précédentes, **caractérisé en ce que** la variation du signal d'excitation électrique (A(t)) et la variation du signal de freinage électrique (B(t)) font chacune partie d'un signal de commande périodique (S(t)) sensiblement sinusoïdal.

10. Procédé de saisie selon l'une des revendications précédentes, **caractérisé en ce que** le signal d'excitation électrique (A(t)) est formé par un front montant du signal de commande (S(t)) et le signal de freinage (B(t)) est formé par un front descendant du signal de commande (S(t)).

11. Procédé de saisie selon l'une des revendications précédentes, **caractérisé en ce que** l'excitation et le freinage sont redressés par rapport à la position de repos (0).

12. Dispositif de saisie (1) destiné à détecter une saisie manuelle et comprenant un élément d'actionnement (2) monté de manière à osciller autour d'une position de repos (0) dans une direction d'oscillation (S) et un actionneur électromagnétique (4, 5) destiné à produire une action d'excitation d'oscillation dans la direction d'oscillation (S) sur l'élément d'actionnement (2) et des moyens (6) destinés à détecter au moins le début d'un contact, et/ou d'un actionnement, manuel de l'élément d'actionnement (2) et une unité de commande (8) destinée à générer un signal de commande électrique S(t), qui comporte dans une séquence temporelle un signal d'excitation électrique (A(t)) et un signal de freinage électrique (B(t)) destinés à commander l'actionneur électromagnétique (4, 5), **caractérisé en ce que** le dispositif de saisie (1) est conçu pour exécuter le procédé de saisie selon l'une des revendications précédentes.

13. Dispositif de saisie selon la revendication précédente, **caractérisé en ce que** l'unité de commande (8) est également conçue pour générer un signal électrique supplémentaire destiné à générer un son synchrone de l'excitation et/ou du freinage, par exemple au moyen d'un transducteur électroacoustique.

14. Véhicule automobile comportant un dispositif de saisie (1) selon l'une des deux revendications précédentes.
